# EUROPEAN PATENT APPLICATION

(11) **EP 4 841 349 A1**
(43) Date of publication of application: **18.11.2026**
(21) Application number: 26176490.6
(22) Date of filing: 05.05.2026
(51) Int. Cl.: G03G 15/00, B41J 2/45, G03G 15/01, G03G 15/043, G03G 21/16, G06F 3/12, H04N 1/64, G06K 15/00, G06K 15/02, H04N 1/00

(54) **IMAGE FORMING APPARATUS**

(30) Priority: 12.05.2025 JP 2025079416
(71) Applicant: KYOCERA Document Solutions Inc., Osaka-shi, Osaka 540-8585 (JP)
(72) Inventor: SHINBA, Minoru, Osaka 540-8585 (JP); TAKIGUCHI, Fumiaki, Osaka 540-8585 (JP); TAMURA, Yoshiaki, Osaka 540-8585 (JP)
(74) Representative: Winter, Brandl - Partnerschaft mbB

(57) **Abstract**

An image forming apparatus includes an exposure device, and a standard controller circuit board. The exposure device is in a printing device configured to perform color printing in an electrographic manner using toner of plural toner colors. Further, the exposure device includes plural light sources corresponding to the plural toner colors, and a video circuit board configured to generate plural lighting control signals corresponding to image data and perform lighting control of the plural light sources in accordance with the plural lighting control signals. The video circuit board includes a single input terminal connected to a serial cable configured to transmit image data outputted from any of the standard controller circuit board and an option controller circuit board as an expansion board, and a data processing circuit configured to generate the plural lighting control signals from the image data inputted to the input terminal.

## Description

### BACKGROUND

### 1. FIELD OF THE PRESENT INVENTION

The present invention relates to an image forming apparatus.

### 2. DESCRIPTION OF THE RELATED ART

An image forming apparatus includes a main controller, an option controller, and a printing device; and the printing device is configured such that both of image data generated by the main controller and image data generated by the option controller can be individually inputted to the printing device.

However, in the aforementioned image forming apparatus, the printing device or a device in a previous stage of the printing device is required to be equipped with an input terminal for the image data generated by the option controller other than an input terminal for the image data generated by the main controller, and therefore, cost of the apparatus increases due to the input terminal. Further, in an electrographic color image forming apparatus, when a circuit board of an image processing circuit that generates control signals of exposure devices of respective toner colors from image data and a circuit board of a driver circuit that controls the exposure devices are individually installed, a multi-core cable is required to transmit the control signals, and therefore, cost of the apparatus increases due to the multi-core cable.

### SUMMARY

An image forming apparatus according to the present invention includes an exposure device, and a standard controller circuit board. The exposure device is in a printing device configured to perform color printing in an electrographic manner using toner of plural toner colors. Further, the exposure device includes plural light sources corresponding to the plural toner colors, and a video circuit board configured to generate plural lighting control signals corresponding to image data and perform lighting control of the plural light sources in accordance with the plural lighting control signals. The video circuit board includes a single input terminal connected to a serial cable configured to transmit image data outputted from any of the standard controller circuit board and an option controller circuit board as an expansion board for this image forming apparatus, and a data processing circuit configured to generate the plural lighting control signals from the image data inputted to the input terminal.

These and other objects, features and advantages of the present invention will become more apparent upon reading of the following detailed description along with the accompanying drawings.

### BRIEF DESCRIPTION OF THE DRAWINGS

Fig. 1 shows a block diagram that indicates a configuration of an image forming apparatus according to an embodiment of the present invention (1/2);
Fig. 2 shows a block diagram that indicates a configuration of an image forming apparatus according to an embodiment of the present invention (2/2); and
Fig. 3 shows a diagram that explains additional installation of an option controller circuit board 61.

### DETAILED DESCRIPTION

Hereinafter, an embodiment according to an aspect of the present invention will be explained with reference to drawings.

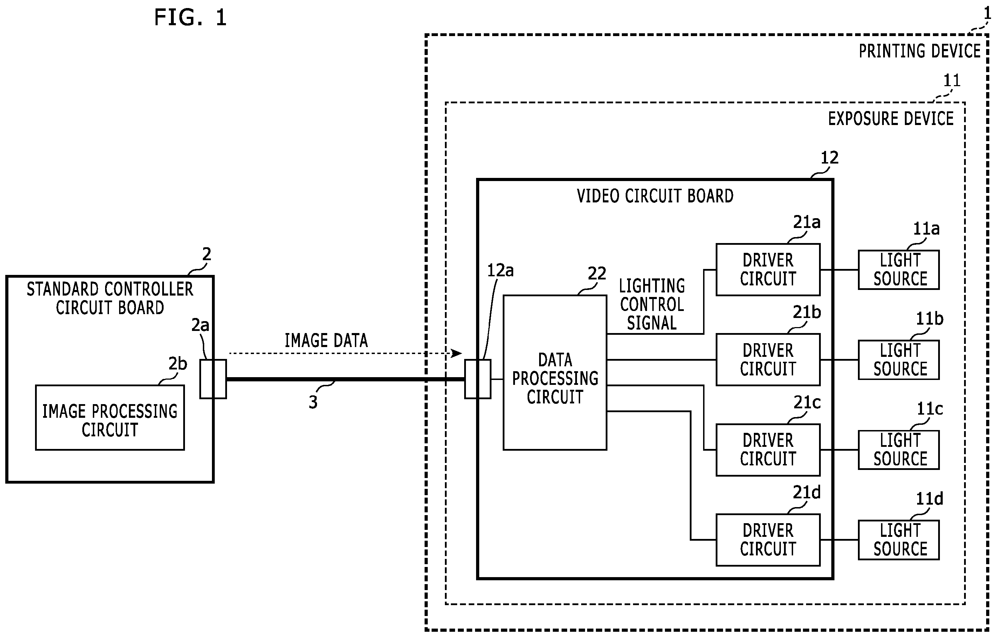

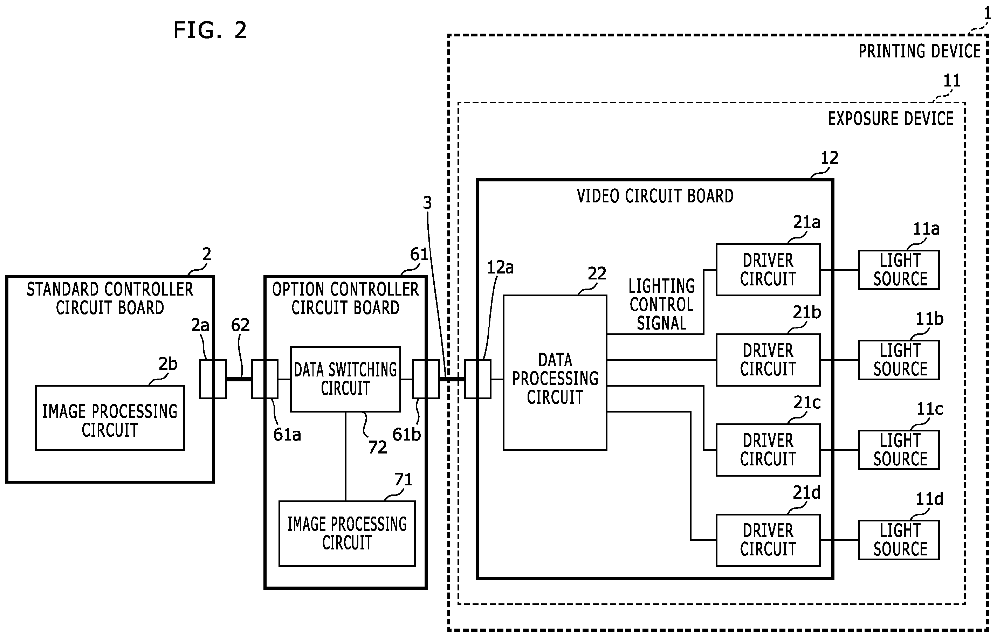

Figs. 1 and 2 show block diagrams that indicate configurations of an image forming apparatus according to an embodiment of the present invention. In a status shown in Fig. 1, an option controller circuit board 61 is not installed to this image forming apparatus; but in a status shown in Fig. 2, an option controller circuit board 61 is installed to this image forming apparatus.

The image forming apparatus shown in Figs. 1 and 2 includes a printing device 1 and a standard controller circuit board 2, and if required, further includes an option controller circuit board 61.

The printing device 1 performs color printing in an electrographic manner using toner of plural toner colors (here, Cyan, Magenta, Yellow and Black). Specifically, the printing device 1 is an electrographic color image forming apparatus, and includes plural photoconductor drums of plural toner colors (not shown), an exposure device 11 that scans laser beams on the plural photoconductor drums and thereby forms electrostatic latent images, plural development devices that develop the electrostatic latent images on the plural photoconductor drums with toner, an intermediate transfer body on which the toner images are primarily transferred from the plural photoconductor drums, a fuser that performs a fixing process of a print sheet on which the toner images have been secondarily transferred from the intermediate transfer body, and the like.

The exposure device 11 includes plural light sources 11a to 11d corresponding to the aforementioned plural toner colors, and a video circuit board 12 that performs lighting control of the plural light sources 11a to 11d. Here, the light sources 11a to 11d are laser diodes, and the exposure device 11 is a laser scanning unit.

The video circuit board 12 generates plural lighting control signals corresponding to image data and performs lighting control of the plural light sources 11a to 11d in accordance with the plural lighting control signals.

Specifically, the video circuit board 12 includes a single input terminal 12a, driver circuits 21a to 21d, and a data processing circuit 22. The driver circuits 21a to 21d are circuits (here, IC (Integrated Circuit) chips) that light the plural light sources 11a to 11d in accordance with the lighting control signals.

Further, a serial cable 3 is connected to the single input terminal 12a and transmits image data outputted from any of (a) the standard controller circuit board 2 and (b) an option controller circuit board 61 as an expansion board for this image forming apparatus. The serial cable 3 is a small-number-core cable (here, 2-core cable) and includes a connector detachable and attachable from/to an input terminal or an output terminal on the circuit board, and can be detached and attached when the option controller circuit board 61 is additionally installed.

Thus, the standard controller circuit board 2 or the option controller circuit board 61 is connected through the serial cable 3 to the single input terminal 12a on the video circuit board 12. Therefore, the video circuit board 12 does not include an input terminal for the option controller circuit board 61 other than the input terminal for connection of the standard controller circuit board 2.

The data processing circuit 22 is a circuit (here, ASIC (Application Specific Integrated Circuit)) that generates plural lighting control signals corresponding to plural toner colors from image data (here, CMYK image data) inputted to the input terminal 12a and outputs the lighting control signals through a wiring pattern on the video circuit board 12 to the driver circuits 21a to 21d, respectively.

Further, the standard controller circuit board 2 includes an output terminal 2a and an image processing circuit 2b; and performs a RIP (Raster Image Processor) process, color conversion, color correction, a half-toning process and the like on the basis of a job request by a user using the image processing circuit 2b and thereby generates color image data, and outputs the color image data through the output terminal 2a.

In a status that the option controller circuit board 61 is not additionally installed, as shown in Fig. 1 for example, the serial cable 3 is connected to the output terminal 2a, and therefore, the image data is inputted to the video circuit board 12 through the output terminal 2a and the serial cable 3.

Conversely, in a status that the option controller circuit board 61 is additionally installed, as shown in Fig. 2 for example, an expansion serial cable 62 is connected to the output terminal 2a, and the image data is inputted to the option circuit board 61 through the output terminal 2a and the expansion serial cable 62.

Further, the option controller circuit board 61 includes an input terminal 61a, an output terminal 61b, an image processing circuit 71, and a data switching circuit 72. The standard controller circuit board 2 is connected to the input terminal 61a through the expansion serial cable 62, and the video circuit board 12 is connected to the output terminal 61b through the cable 3.

Thus, the additionally-installed option controller circuit board 61 (a) is connected to the video circuit board 12 with the serial cable 3 that connected the standard controller circuit board 2 to the video circuit board 12 when the option controller circuit board 61 was not additionally installed and (b) is connected to the standard controller circuit board 2 with the expansion serial cable 62. The expansion serial cable 62 is a serial cable identical or similar to the serial cable 3. However, the expansion serial cable 62 may have a different length from the serial cable 3 (may have a shorter length than the serial cable 3).

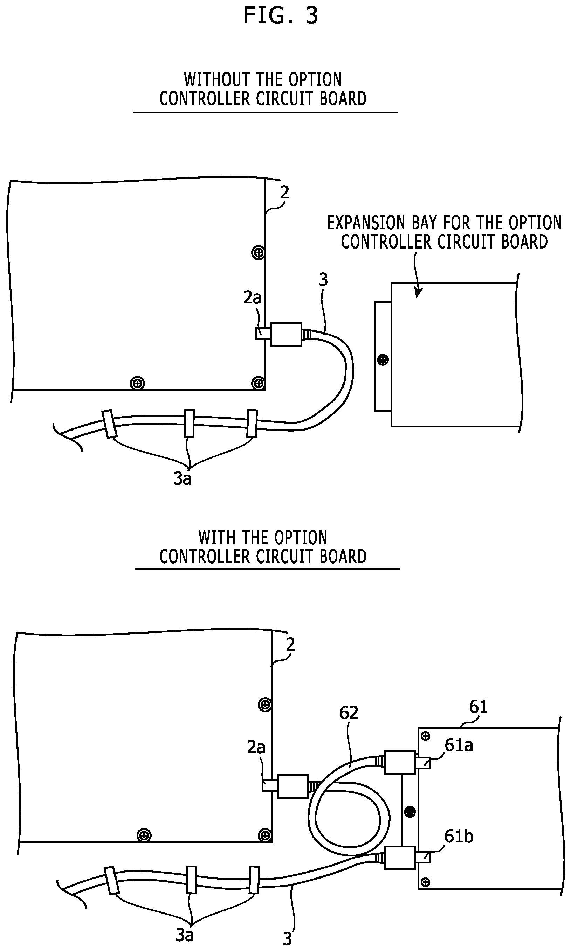

Fig. 3 shows a diagram that explains additional installation of an option controller circuit board 61. As shown in Fig. 3 for example, in this image forming apparatus, an expansion bay for the option controller circuit board 61 has been installed, the serial cable 3 is fixed to the image forming apparatus (chassis, housing or the like of it) with a fastener 3a, and the expansion bay is installed at a position that enables the serial cable 3 to be connected to the option controller circuit board 61.

Consequently, replacement of the serial cable 3 (and the fastener 3a) is not required when the option controller circuit board 61 is additionally installed, and a relatively short cable can be used as the expansion serial cable 62.

Further, the image processing circuit 71 generates color image data as well as the image processing circuit 2b. For example, the image processing circuit 71 generates color image data for a specific job different from a job processed by the image processing circuit 2b.

The data switching circuit 72 selects one of (a) image data inputted to the input terminal 61a and (b) image data generated and outputted by the image processing circuit 71 in this option controller circuit board 61, and outputs the selected image data through the output terminal 61b.

For example, the data switching circuit 72 receives a switching control signal from the standard controller circuit board 2 and performs the selection of the image data in accordance with the switching control signal. For example, the switching control signal indicates a job type; and for a certain job type, the image data outputted from the standard controller circuit board 2 is selected, but for another job type, the image data outputted from the internal image processing circuit 71 is selected.

The following part explains a behavior of the aforementioned image forming apparatus.

In a status that the option controller circuit board 61 is not additionally installed, the standard controller circuit board 2 generates image data using the image processing circuit 2b and transmits the image data through the serial cable 3 to the video circuit board 12 in the exposure device 11.

In the video circuit board 12 in the exposure device 11, the data processing circuit 22 generates plural lighting control signals corresponding to the inputted image data and supplies the lighting control signals to the driver circuits 21a to 21d, and the driver circuits 21a to 21d perform lighting control of the light sources 11a to 11d in accordance with the lighting control signals, respectively. Consequently, in the printing device 1, electrostatic latent images are formed correspondingly to an image based on the image data (i.e. an image to be printed), and development, transfer, fixing and the like of the corresponding toner images are performed and thereby printing is performed.

Conversely, in a status that the option controller circuit board 61 is additionally installed, for a job of a specific job type, the standard controller circuit board 2 generates image data using the image processing circuit 2b and transmits the image data through the serial cable 62, and supplies a switching control signal to cause to select this image data (through a control line not shown) to the option controller circuit board 61.

In the option controller circuit board 61, the data switching circuit 72 selects the image data from the standard controller circuit board 2 in accordance with the switching control signal, and transmits the image data through the serial cable 3 to the video circuit board 12 in the exposure device 11.

In the video circuit board 12 in the exposure device 11, the data processing circuit 22 generates plural lighting control signals corresponding to the inputted image data and supplies the lighting control signals to the driver circuits 21a to 21d, and the driver circuits 21a to 21d perform lighting control of the light sources 11a to 11d in accordance with the lighting control signals, respectively. Consequently, in the printing device 1, electrostatic latent images are formed correspondingly to an image based on the image data (i.e. an image to be printed), and development, transfer, fixing and the like of the corresponding toner images are performed and thereby printing is performed.

Conversely, in a status that the option controller circuit board 61 is additionally installed, for a job of another specific job type, the standard controller circuit board 2 does not perform the generation and the transmission of image data and supplies a switching control signal to cause to select the image data generated by the image processing circuit 71 in the option controller circuit board 61 (through a control line not shown) to the option controller circuit board 61.

In the option controller circuit board 61, the data switching circuit 72 selects the image data from the image processing circuit 71 in accordance with the data switching signal, and transmits the image data through the serial cable 3 to the video circuit board 12 in the exposure device 11.

In the video circuit board 12 in the exposure device 11, the data processing circuit 22 generates plural lighting control signals corresponding to the inputted image data and supplies the lighting control signals to the driver circuits 21a to 21d, and the driver circuits 21a to 21d performs lighting control of the light sources 11a to 11d in accordance with the lighting control signals, respectively. Consequently, in the printing device 1, electrostatic latent images are formed correspondingly to an image based on the image data (i.e. an image to be printed), and development, transfer, fixing and the like of the corresponding toner images are performed and thereby printing is performed.

As mentioned, in the aforementioned embodiment, the exposure device 11 includes the plural light sources 11a to 11d corresponding to the plural toner colors, and the video circuit board 12 configured to generate plural lighting control signals corresponding to image data and perform lighting control of the plural light sources 11a to 11d in accordance with the plural lighting control signals. Further, the video circuit board 12 includes the single input terminal 12a connected to the serial cable 3 configured to transmit image data outputted from any of the standard controller circuit board 2 and the option controller circuit board 61 as an expansion board for this image forming apparatus, and the data processing circuit 22 configured to generate the plural lighting control signals from the image data inputted to the input terminal 12a.

Consequently, plural individual input terminals are not required on the video circuit board 12 for the standard controller circuit board 2 and the option controller circuit board 61, and the data processing circuit 22 is built in the video circuit board 12 in the exposure device 11 and therefore a multi-core cable to transmit the plural lighting control signals between the circuit boards is not required; and consequently, a configuration that enables additional installation of the option controller is achieved at a low cost.

It should be understood that various changes and modifications to the embodiments described herein will be apparent to those skilled in the art. Such changes and modifications may be made without departing from the spirit and scope of the present subject matter and without diminishing its intended advantages. It is therefore intended that such changes and modifications be covered by the appended claims.

## Claims

1. An image forming apparatus, comprising:
an exposure device in a printing device configured to perform color printing in an electrographic manner using toner of plural toner colors; and
a standard controller circuit board;
wherein the exposure device comprises plural light sources corresponding to the plural toner colors, and
a video circuit board configured to generate plural lighting control signals corresponding to image data and perform lighting control of the plural light sources in accordance with the plural lighting control signals; and
the video circuit board comprises a single input terminal connected to a serial cable configured to transmit image data outputted from any of the standard controller circuit board and an option controller circuit board as an expansion board for this image forming apparatus, and
a data processing circuit configured to generate the plural lighting control signals from the image data inputted to the input terminal.

2. The image forming apparatus according to claim 1, further comprising the option controller circuit board connected to the standard controller circuit board and the video circuit board in between; and
the option controller circuit board comprises an image processing circuit, and a data switching circuit configured to select one of image data outputted from the standard controller circuit board and image data outputted from the image processing circuit and output the selected image data to the video circuit board.

3. The image forming apparatus according to claim 2, further comprising an expansion serial cable;
wherein the option controller circuit board (a) is connected to the video circuit board with the serial cable that connected the standard controller circuit board to the video circuit board when the option controller circuit board was not additionally installed and (b) is connected to the standard controller circuit board with the expansion serial cable.

4. The image forming apparatus according to claim 3, further comprising an expansion bay for the option controller circuit board;
wherein the serial cable is fixed to the image forming apparatus with a fastener; and
the expansion bay is installed at a position that enables the serial cable to be connected to the option controller circuit board.
